## Europäisches Patentamt
## European Patent Office
## Office européen des brevets

(19)

(11) Publication number: **0 037 721**
A2

(12)

# EUROPEAN PATENT APPLICATION

(21) Application number: **81301456.0**

(51) Int. Cl.³: **G 05 B 19/417**

(22) Date of filing: **03.04.81**

(30) Priority: **04.04.80 JP 43446/80**

(43) Date of publication of application:
**14.10.81 Bulletin 81/41**

(84) Designated Contracting States:
**DE FR GB**

(71) Applicant: **FUJITSU FANUC LIMITED**
5-1, Asahigaoka, 3-chome
Hino-shi, Tokyo 191(JP)

(72) Inventor: **Nozawa, Ryoichiro**
12-1-2105, Sarugaku-cho Shibuya-ku
Tokyo(JP)

(72) Inventor: **Kiya, Nobuyuki**
13-106, Yokokawacho-jutaku 108, Yokokawa-cho
Hachioji-shi Tokyo(JP)

(74) Representative: **George, Sidney Arthur**
Gill Jennings & Every 53-64 Chancery Lane
London WC2A 1HN(GB)

(54) **Numerical machine tool control.**

(57) A numerical machine tool control system includes a plurality of machine tools (11, 12, ...) controlled by a corresponding plurality of numerical control circuits (21, 22 ...), each of which includes a manual data inputting panel (31,32, ...). An automatic operation command device (8) is common to all of the numerical control circuits. Transmission means (71,72, ...) is provided between each of the numerical control circuits and the operation command device for exchanging input data for the machine tool and output data from the machine tool, for exchanging data for the manual data panel and data from the manual data panel, and for exchanging treatment program data. The entire operation of the plurality of machine tools is thereby controlled by the operation command device.

./...

*Fig. 2*

## NUMERICAL MACHINE TOOL CONTROL

This invention relates to a system for numerically controlling a machine tool.

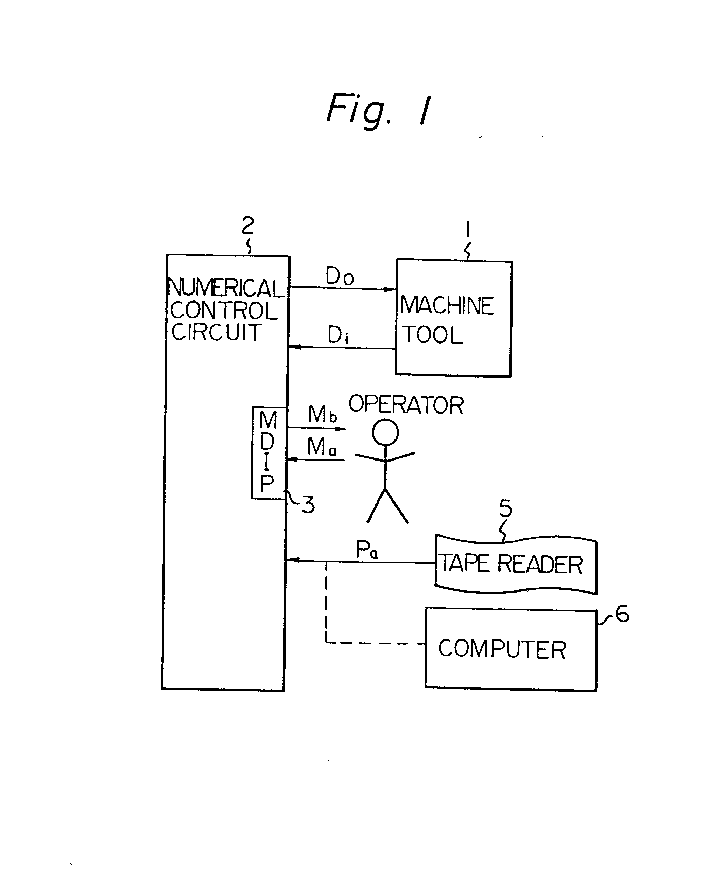

A prior art programmed control process of a system for numerically controlling a machine tool with the use of an electronic computer is illustrated in Fig.1. Either a signal $P_a$ from a tape reader 5 or a signal from an electronic computer 6 is selectively supplied to a numerical control (NC) circuit 2 for a machine tool 1. The data are exchanged through transmission lines between the numerical control circuit 2 and the machine tool 1. A manual data inputting panel (MDIP) 3 provided in the numerical control circuit 2 receives an input signal $M_a$ which is fed in by an operator and sends an output signal $M_b$ back to the operator.

However, in order to carry out a program control with the use of the computer 6 in the system of Fig.1, it is necessary to obtain an input signal $D_i$ from the machine tool 1 and an output signal $D_o$ for the machine tool 1, which signals are exchanged between the numerical control circuit 2 and the machine tool 1, and the signals $M_a$ and $M_b$ which are applied to and displayed at the panel 3, and then to have the computer operate on the basis of the obtained data. Such processes in the system of Fig.1 have been inconvenient and unsatisfactory from the viewpoint of the performance of automatic programmed control of the system.

It is an object of the present invention to provide numerical control of a machine tool of the direct numerical control (DNC) type with a general purpose electronic computer in the form of an entirely automatic operation command, by using an electronic computer which is common to a plurality of numerical control circuits for machine tools.

In accordance with the present invention there is provided a numerical machine tool control system including a numerical control circuit having a manual data panel, the system being characterised by a plurality of machine tools; a plurality of numerical control circuits, each of which includes a manual data inputting panel; an automatic operation commander device which is common for all of the plurality of numerical control circuits; and transmission means between each of the numerical control circuits and the operation commander device for exchanging input data for the machine tool and output data from the machine tool, for exchanging data for the manual data panel and data from the manual data panel and for exchanging treatment program data; whereby the entire operation of the plurality of machine tools is controlled by the operation commander device.

An embodiment of the invention will now be described, by way of example, with reference to the accompanying drawings, in which:

Fig.1 is a block schematic diagram of a prior art system for numerically controlling a machine tool with the use of an electronic computer;

Fig.2 is a block schematic diagram of a numerical control machine tool system in accordance with an embodiment of the present invention;

Fig.3 is a logic flow chart for the system of Fig.2, and

Fig.4 is a block schematic diagram of the system of Fig.2 in association with a communication network.

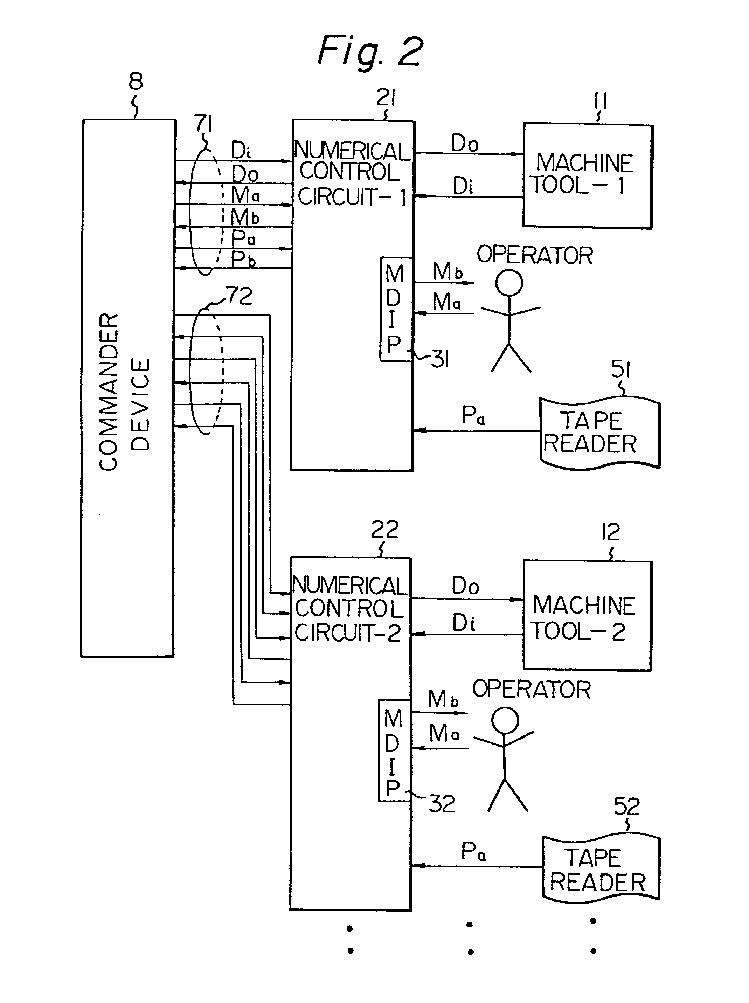

A circuit for realising a numerical control machine tool system in accordance with an embodiment of the present invention is illustrated in Fig.2. A plurality of numerical control circuits 21, 22, ... are provided for a plurality of machine tools 11, 12, ...,
respectively. Input data $D_i$ from the machine tool 11
and output data $D_o$ for the machine tool 11 are
exchanged between the machine tool 11 and the numerical
control circuit 21 through transmission lines. Manual
data inputting panels 31, 32, ... are provided for the
numerical control circuits 21, 22, ..., respectively.
The panels 31, 32, ... receive manual inputs $M_a$ from an
operator and send a display output $M_b$ to the operator.
Program inputs $P_a$ are supplied to the numerical control
circuits 21, 22, ... from tape readers 51, 52, ...,
respectively.

An entirely automatic operation commander device
comprising an electronic computer 8 is provided in
common to the numerical control circuits 21, 22, ...
Each numerical control circuit 21, 22, ... is connected
to the computer 8 through a respective transmission
route 71, 72, ... .

For example, input data $D_i$ from a machine tool,
output data for the machine tool, manually-input data
$M_a$ to the panel, display output data $M_b$ on the panel,
a program input $P_a$ and a fed-back program input $P_b$ are
exchanged between the computer 8 and the numerical
control circuit 21 through the transmission route 71.

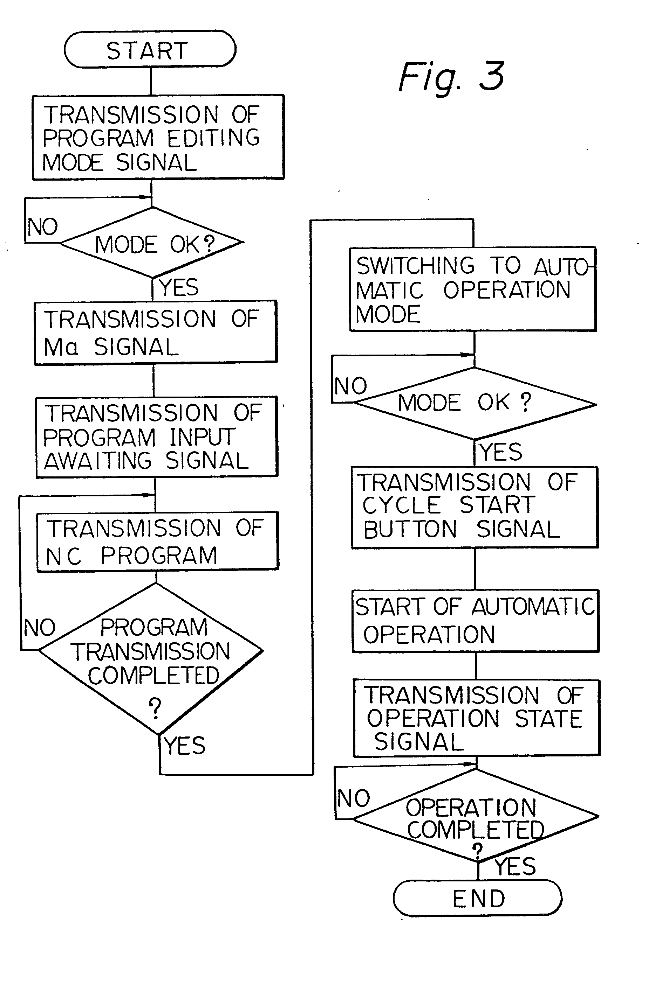

In the circuit of Fig.2, by sending data related to
keys on the manual data inputting panel 31 from the
computer 8 to the numerical control circuit 21, the
manual data inputting panel 31 can be controlled at the
computer 8. Also, information regarding the data $D_i$
which are sent from the machine tool 11 to the numerical
control circuit 21 can be sent from the computer 8 to
the numerical control circuit 21. Further, information
regarding the data $D_o$ which are sent from the numerical
control circuit 21 to the machine tool 11 can be sent
from the numerical control circuit 21 to the computer 8.
The steps of the operation of the circuit of Fig.2 are illustrated in the logic flow chart of Fig.3. Firstly, a program editing mode signal is sent from the computer 8 to the numerical control circuit 21 through the $D_i$ line. A replay signal for an inquiry "Is the mode OK?" is sent from the numerical control circuit to the computer 8. If the mode is OK, a signal corresponding to the $M_a$ operation on the panel 31 is sent from the computer 8 to the numerical control circuit 21 through the $M_a$ line. A program input awaiting signal is then sent from the numerical control circuit 21 to the computer 8 through the $P_b$ line. A numerical control program is then transmitted from the computer 8 to the numerical control circuit 21, and it is determined whether or not the transmission of the numerical control program is completed. If it is determined that the transmission is completed, a signal for switching the mode into the automatic operation mode is sent from the computer 8 to the numerical control circuit 21 through the $D_i$ line. Then, a reply signal for the inquiry "Is the mode OK?" is sent from the numerical control circuit 21 to the computer 8. If the mode is OK, a cycle start button signal is sent from the computer 8 to the numerical control circuit 21 through the $D_i$ line. Upon receipt of the cycle start button signal, the automatic operation of the machine tool 11 is started. After the start of the automatic operation, operation state signals are sent from the numerical control circuit 21 to the computer 8. Monitoring of the operation state signals is carried out by the computer 8. When the computer 8 detects that the operation of the machine tool 11 is completed, a command from the computer 8 stops the operation of the machine tool 11.

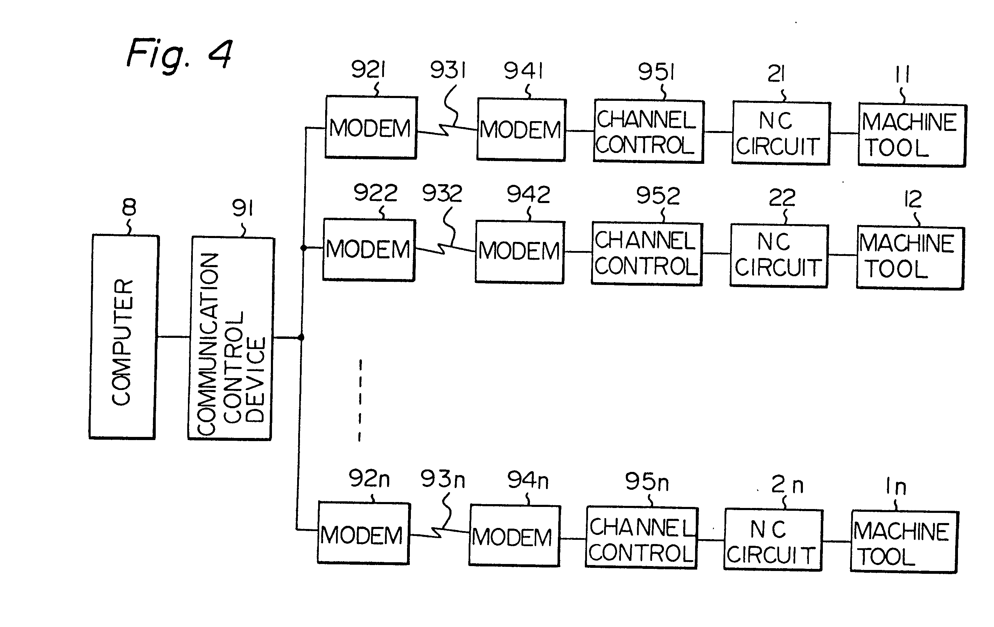

A system in which the circuit of Fig.2 is included in association with a communication network is illustrated in Fig.4. The computer 8, as the entirely automatic operation command device (CMD), is connected to transmitter MODEMs 921, 922, ...92n through a communication control device 91. The transmitter MODEMs 921, 922, ...92n are connected to receiver MODEMs 941, 942, ...94n through communication channels 931, 932, ...93n, respectively. The receiver MODEMs 941, 942, ...94n are connected to numerical control circuits 21, 22, ...2n through channel control devices 951, 952, ...95n, respectively. The numerical control circuits 21, 22, ...2n are connected to machine tools 11, 12, ...1n.

By use of the system of Fig.4, the operation of many machine tools located separately and at various distances from the central control station can be controlled by a computer, as an entirely automatic operation command device, in the central control station. By applying the system of Fig.4 to many machine tools distributed in many factories which belong to one organisation, it is even possible to effect operation of the many machine tools without the attendance of machine tool operators.

CLAIMS

1. A numerical machine tool control system including a numerical control circuit having a manual data panel, the system being characterised by a plurality of machine tools (11,12,...); a plurality of numerical control circuits (21,22,...), each of which includes a manual data inputting panel (31,32,...); an automatic operation command device(8)which is common for all of the plurality of numerical control circuits; and transmission means (71,72,...) between each of the numerical control circuits and the operation command device for exchanging input data for the machine tool and output data from the machine tool, for exchanging data for the manual data panel and data from the manual data panel, and for exchanging treatment program data; whereby the entire operation of the plurality of machine tools is controlled by the operation command device.

2. A system as claimed in Claim 1, characterised in that the transmission means comprises, for each numerical control circuit (21,22,...), a communication channel (931,932,...); a transmitting modem (921,922,...) connected between one end of the communication channel and the operation command device (8); and a receiving modem (941,942,...) connected between the other end of the communication channel and the numerical control circuit.

## Fig. 1

Fig. 2

*Fig. 3*

```
                    ┌─────────────┐
                    │    START    │
                    └──────┬──────┘
                           │
              ┌────────────────────────┐
              │ TRANSMISSION OF        │
              │ PROGRAM EDITING        │
              │ MODE SIGNAL            │
              └────────────┬───────────┘
                           │
         NO       ◇ MODE OK? ◇
          ◄───────
                       │ YES
              ┌────────────────────────┐
              │ TRANSMISSION OF        │
              │ Ma SIGNAL              │
              └────────────┬───────────┘
                           │
              ┌────────────────────────┐
              │ TRANSMISSION OF        │
              │ PROGRAM INPUT          │
              │ AWAITING SIGNAL        │
              └────────────┬───────────┘
                           │
              ┌────────────────────────┐
              │ TRANSMISSION OF        │
              │ NC PROGRAM             │
              └────────────┬───────────┘
                           │
         NO       ◇ PROGRAM            ◇
          ◄─────── TRANSMISSION
                     COMPLETED ?
                       │ YES
```

```
              ┌────────────────────────┐
              │ SWITCHING TO AUTO-     │
              │ MATIC OPERATION        │
              │ MODE                   │
              └────────────┬───────────┘
                           │
         NO       ◇ MODE OK? ◇
          ◄───────
                       │ YES
              ┌────────────────────────┐
              │ TRANSMISSION OF        │
              │ CYCLE START            │
              │ BUTTON SIGNAL          │
              └────────────┬───────────┘
                           │
              ┌────────────────────────┐
              │ START OF AUTOMATIC     │
              │ OPERATION             │
              └────────────┬───────────┘
                           │
              ┌────────────────────────┐
              │ TRANSMISSION OF        │
              │ OPERATION STATE        │
              │ SIGNAL                 │
              └────────────┬───────────┘
                           │
         NO       ◇ OPERATION          ◇
          ◄─────── COMPLETED ?
                       │ YES
                    ┌─────────────┐
                    │    END      │
                    └─────────────┘
```

# Fig. 4